# EUROPEAN PATENT APPLICATION

(11) **EP 4 726 061 A1**
(43) Date of publication of application: **15.04.2026**
(21) Application number: 25207597.3
(22) Date of filing: 08.10.2025
(51) Int. Cl.: C21D 1/10, C21D 1/42, C21D 1/667, C21D 9/40, F16C 33/64, H05B 6/10, H05B 6/36, H05B 6/40, F16C 19/38, H05B 6/38

(54) **INDUCTION HARDENING TREATMENT METHOD AND APPLICATION FOR LARGE BEARING RING**

(30) Priority: 10.10.2024 CN 202411407665
(71) Applicant: Aktiebolaget SKF, 415 50 Göteborg (SE)
(72) Inventor: Chen, Qibin, Dalian Liaoning, 116021 (CN); Qian, Weihua, Shanghai, 201800 (CN); Peng, Huailei, Shanghai, 200245 (CN); Wendel, Michael, 28219 Bremen (DE); Reichert, Juergen, 97499 Donnersdorf (DE); Sahlgren, Johan, 43136 Mölndal (SE); Zhao, Ming, Dalian, 116620 (CN); Du, Longnian, Dalian, 116600 (CN); Ma, Shulong, Baoding, 071000 (CN)
(74) Representative: Kuhstrebe, Jochen

(57) **Abstract**

A induction hardening treatment method for a large bearing ring, comprising 1) austenitizing step: heating the bearing ring by means of inductors (iᵣ₁, iᵣ₂, I_{b}) so that surface temperature of the bearing ring reaches austenitizing temperature; and 2) martensitizing step: spraying a coolant on the bearing ring by means of showers (sᵣ, s_{b}) to cool the bearing ring rapidly, and to transform austenite in the structure of the bearing ring into martensite. Said austenitizing step is realized by simultaneously heating a raceway side surface (fᵣ) and a raceway back side surface (f_{b}) of the bearing ring by means of the inductors (i). Based on the above method, the present invention also provides an induction heating and quenching machine tool for a large bearing ring. The double-side heating not only allows the bearing ring to be hardened on both faces, but also can adjust a formation depth of a hardened layer below both side surfaces of the bearing ring. Said depth may reach as deep as a core portion of the bearing ring, thereby allowing the hardened layer to be formed throughout the entire thickness of the bearing ring, satisfying material performances required by different applications to the greatest extent.

## Description

### Technical field of the invention

The present invention relates to an induction hardening treatment method for a large bearing ring, as well as an induction heating and quenching machine tool that implements a hardening treatment on the large bearing ring by utilizing this method.

### Prior art

Induction hardening is becoming increasingly widely applied in the surface hardening treatment process for a large bearing ring with a diameter of 500 mm or more. Said term "induction hardening" refers to a heat treatment process that heats a surface of at least a raceway portion of the bearing ring to the austenitizing temperature (aiming to achieve uniform austenite grains) by using an induction heater (hereinafter referred to as "inductor"), and then to form the uniform fine martensite and the multiphase structure with granular cementite by rapid cooling. This treatment can improve the hardness, strength, and wear resistance of the raceway surface of the bearing ring.

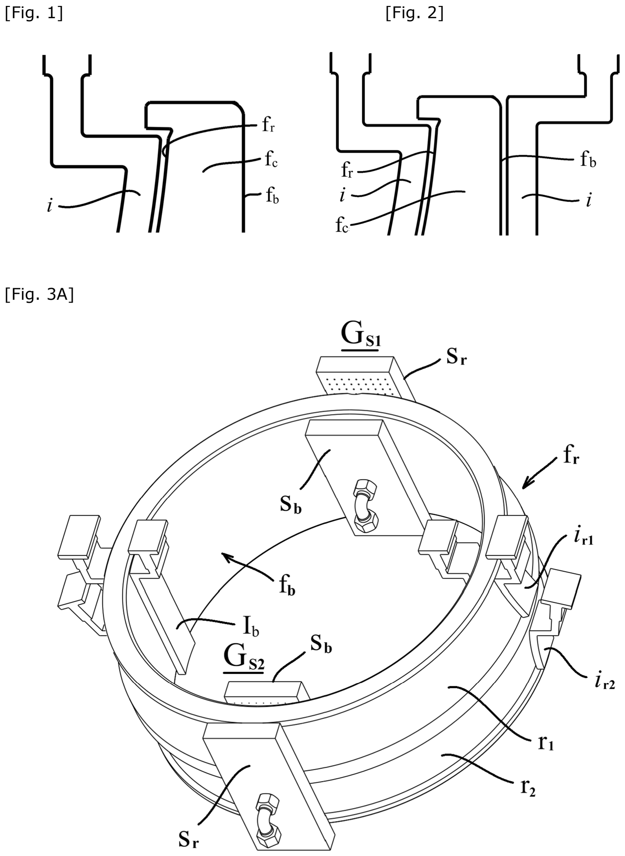

Fig. 1 partly shows, using a double row inner ring of a self-aligning roller bearing as an example, a schematic diagram of a method for heating a surface of a side formed with a raceway (hereinafter referred to as "raceway side") of the bearing ring by using the traditional induction hardening process. This method only heats the raceway side surface fᵣ, resulting in a temperature inconsistency between a core portion f_{c} of the bearing ring and the raceway side surface fᵣ: the temperature of the raceway side surface fᵣ close to an inductor i is high, the temperature of the raceway back side surface f_{b} far from the inductor i is low, and the temperature of the core portion f_{c} is between the above two. Due to the lower temperatures in the raceway back side f_{b} and the core portion f_{c} the ferrite in the structure of them cannot be transformed into austenite, and thus, after cooling, the ferrite in them cannot be transformed into martensite, either. This leads to the raceway back side and the core portion being inferior in terms of the strength, hardness, and wear resistance, compared to the raceway side surface. If the temperature of the raceway side surface is increased so as to make the core portion and the raceway back side reach the austenitizing temperature, the overheating of the temperature of the raceway side would cause the austenite grains therein to coarsen, resulting in an increase in residual austenite after cooling, and the residual austenite cannot be fully transformed into the martensite. Therefore, excessive heating of the raceway side is instead detrimental to improving the surface strength and toughness of the raceway side.

Reality calls for an induction hardening treatment method and equipment that can improve the strength and toughness performance of the bearing ring over a larger range of thicknesses.

### Summary of the invention

In order to solve the above technical problems, the present invention provides a surface hardening treatment method for a large bearing ring comprising the following sequential steps: 1) austenitizing step: heating the bearing ring by means of inductors (i), so that surface temperature of the bearing ring reaches austenitizing temperature; and 2) martensitizing step: spraying a coolant on the bearing ring by means of showers to cool the bearing ring rapidly, so as to transform austenite in the structure of the bearing ring into martensite. Said austenitizing step is realized by simultaneously heating a raceway side surface and a raceway back side surface of the bearing ring by means of the inductors.

The double-side heating allows the raceway back side of the bearing ring to achieve the same induction hardening treatment as the raceway side, resulting in a bearing ring with double hardened faces. More importantly, after both side surfaces have been heated to the austenitizing temperature, by maintaining this austenitizing temperature for a predetermined period of time, the heat conduction mechanism can transfer heat to a predetermined depth below both side surfaces of the bearing ring, reaching as deep as the core portion of the bearing ring. The continuously maintained austenitizing temperature not only allows the austenitic component to be more uniform, but also enables the predetermined depth below the surface of the bearing ring to achieve the austenitization, until it achieves the austenitization within the entire (thickness) range of the bearing ring, including the core portion. In short, the double-side heating not only allows the bearing ring to be hardened on on both faces, but also can adjust a formation depth of a hardened layer below both side surfaces of the bearing ring. Said depth can reach as deep as the core portion of the bearing ring, thereby allowing the hardened layer to be formed throughout the entire thickness of the bearing ring, satisfying material performances required by different applications to the greatest extent.

Based on the above method, the present invention also provides an induction heating and quenching machine tool for a large bearing ring comprising a drive mechanism, inductors and showers. Wherein, said drive mechanism is used to drive the bearing ring to rotate in position, said inductors are used to induction heat said bearing ring while said bearing ring is rotating so that the surface temperature of the bearing ring reaches the austenitizing temperature; said showers are used to spray a coolant on the austenitized bearing ring to transform the austenite in the structure of the austenitized bearing ring into the martensite. Said inductors are provided to simultaneously heat a raceway side surface and a raceway back side surface of the bearing ring.

Said machine tool is provided to be able to heat both side surfaces of the bearing ring, thereby possessing the beneficial effects of the above double-side heating method.

### Brief description of the figures

Fig. 1 shows a schematic diagram of a method in which a bearing ring is induction heated only on its raceway side surface in the prior art;
Fig. 2 shows a schematic diagram of a method for simultaneously induction heating a raceway side and a raceway back side of a bearing ring of the present invention;
Figs. 3A and 3B show schematic diagrams of an induction hardening method of a first embodiment of the present invention from different perspectives;
Fig. 3C shows a schematic diagram of a state in which all the inductors retreat to a position beyond a certain safe distance from a position close to the bearing ring, after the heating steps shown in Figs. 3A and 3B have been completed;
Fig. 4 shows a schematic diagram of an induction hardening method of a second embodiment of the present invention; and
Figs. 5A to 5C show schematic diagrams of an induction hardening method of a third embodiment of the present invention from different perspectives.

### Detailed description of the invention

In the following description, identical or similar drawing marks are always used to denote the same or similar components. Terms indicating directions, for example, "axial", "radial" and "circumferential (direction)", each refer to the axial, radial and circumferential (direction) of the component being described, unless otherwise defined or specified.

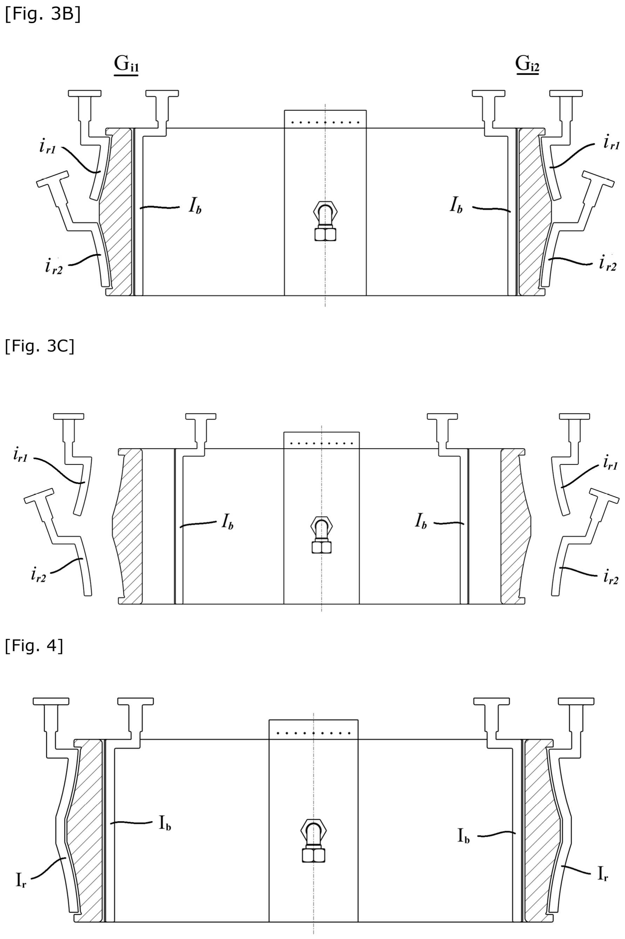

Fig. 2 shows a schematic diagram of an induction hardening treatment method for simultaneously induction heating a raceway side surface and a raceway back side surface of a bearing ring of the present invention. Said method comprises the following sequential steps: 1) simultaneously heating the raceway side surface fᵣ and the raceway back side surface f_{b} of the bearing ring by means of inductors i, so that the temperatures of both side surfaces each reaches the austenitizing temperature (thus this step is also referred to as "austenitizing step"); and 2) simultaneously implement rapid cooling on the raceway side surface fᵣ and the raceway back side surface f_{b} of the bearing ring by means of showers sᵣ, s_{b} (see Figs. 3A, 3B, and 3C), so as to transform the austenite in the structure of the both side surfaces into the martensite (thus this step is also referred to as "martensitizing step"). Unlike the existing method shown in Fig. 1, in the present invention, the induction heating and rapid cooling to the surfaces of the bearing ring are performed simultaneously on both sides (i.e., the raceway side and the raceway back side) of the bearing ring. The various different embodiments of the present invention are described below in detail in conjunction with Figs. 2 to 4.

Figs. 3A and 3B show schematic diagrams of a method of a first embodiment for double-side heating the bearing ring by means of the inductors of the present invention from different perspectives. As shown, the inductors i are fixedly distributed in a circumferential direction of the bearing ring in a form of inductor packs Gᵢ₁, Gᵢ₂. Theoretically, the higher the distribution density of the inductor packs, and the more uniform the circumferential spacing, the more beneficial it is to improve the hardening uniformity of the bearing ring.

In the above first embodiment, at least two inductor packs Gᵢ₁, Gᵢ₂ each comprises two raceway side short type inductors iᵣ₁, iᵣ₂ covering double row raceways r₁, r₂, and one raceway back side long type inductor I_{b} covering back sides of the double row raceways r₁, r₂. Said raceway side short type inductors iᵣ₁, iᵣ₂ refer to inductors whose shape fits (is parallel to) the raceway side surface fᵣ of the bearing ring, but length only covers one of the double row raceways r₁, r₂. Said raceway back side long type inductor I_{b} refers to an inductor whose shape fits (is parallel to) the raceway back side surface f_{b} of the bearing ring, and length can cover the entire back side of the double row raceways r₁, r₂. In other words, in each inductor pack Gᵢ₁, Gᵢ₂ of the first embodiment, the raceway side inductors comprise two short type inductors iᵣ₁, iᵣ₂ covering the double row raceways r₁, r₂, respectively, and the raceway back side inductor comprises only one long type inductor I_{b} covering the entire back side surface of the double row raceways r₁, r₂.

In a preferred case, the inductors are provided to, after the both side surfaces of the bearing ring have reached the austenitizing temperature, continue to maintain said austenitizing temperature for a predetermined period of time, so as to allow the thermal conduction effect to transfer heat to a predetermined depth below the surface of the bearing ring. This method can adjust the hardening depth (i.e., the thickness of the hardened layer) on both sides of the bearing ring according to the application requirements, thereby obtaining the material performances required by different types of loads. As a further preferred embodiment, said long type inductor and short type inductor may each have independent coils and power supply for providing the power input required to maintain the austenitizing temperature.

After the austenitizing step is completed, as shown in Fig. 3C, all inductors iᵣ₁, iᵣ₂, and I_{b} are provided to retract to beyond a predetermined safe distance from a position close to the bearing ring, to allow the showers sᵣ, s_{b} to implement rapid cooling on the bearing ring (i.e., the martensitizing step) while stopping the heating of the bearing ring. In the present invention, said rapid cooling is realized by spraying a coolant on the bearing ring by means of the shower. Said coolant may be water, and may also be an aqueous solution of certain polymers (e.g., polyalkylene glycol-based polymers). The temperature of said aqueous solution and the concentration of the polymer may be set to avoid the occurrence of cracks in the bearing ring during the hardening process.

Similar to the situation with inductors, the showers sᵣ, s_{b} are also provided to simultaneously implement the spray cooling on the raceway side surface fᵣ and the raceway back side surface f_{b} of the bearing ring. Said showers are fixedly distributed in the circumferential direction of the bearing ring in a form of shower packs Gₛ₁, Gₛ₂. The number of said shower packs is at least two, preferably, the shower packs are symmetrically distributed in the circumferential direction of the bearing ring. Theoretically, the higher the distribution density of the shower packs, and the more uniform the circumferential spacing, the more beneficial it is to improve the hardening uniformity of the bearing ring.

In the embodiment shown in Fig. 3A, the shower packs Gₛ₁, Gₛ₂ comprises a raceway side shower sᵣ for cooling the raceway side surface fᵣ of the bearing ring and a raceway back side shower s_{b} for cooling the raceway back side surface f_{b} of the bearing ring. Alternatively, the shower packs Gₛ₁, Gₛ₂ may also be independently constituted by independent one shower (not shown). Said independent one shower is provided to be able to simultaneously implement the spray cooling on both the raceway side surface fᵣ and the raceway back side surface f_{b} of the bearing ring. It is not difficult to understand that the showers and the shower packs are not limited by specific structures and configuration numbers, as long as the cooling can be performed simultaneously on both side surfaces of the bearing ring.

Fig. 4 shows a schematic diagram of a method of a second embodiment for heating both sides of the bearing ring by means of inductor packs of the present invention. Unlike the first embodiment, each inductor pack Gᵢ₁, Gᵢ₂ comprises one raceway side long type inductor Iᵣ covering the double row raceways r₁, r₂ and one raceway back side long type inductor I_{b} covering the back sides of the double row raceways, that is, in the second embodiment, the bearing ring is heated on both the raceway side and the raceway back side with long type inductors. The advantage of the long type inductors is that the raceway side surface fᵣ and the raceway back side surface f_{b} of the bearing ring corresponding to the width of the double row raceway are both uniformly heated, thus the degree of thermal deformation is small, and the disadvantage thereof is that the raceway side long type inductor Iᵣ has a complex shape and is difficult to manufacture.

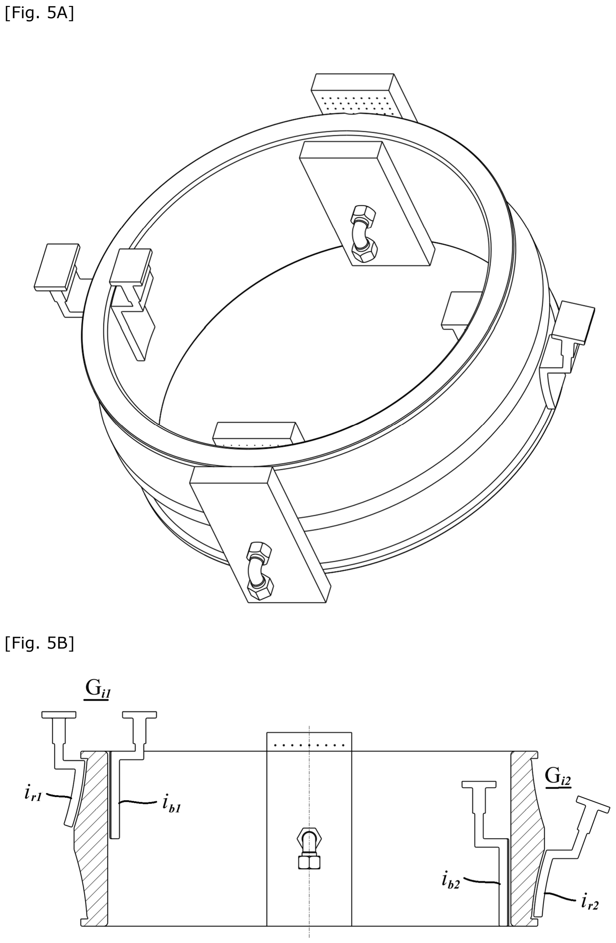

Figs. 5A and 5B further show a schematic diagram of a method of a third embodiment of the present invention. Unlike the first and second embodiments, in the third embodiment, the bearing ring adopts raceway side short type inductors iᵣ₁, iᵣ₂ that only cover a single row raceway, and short type inductors i_{b1}, i_{b2} that cover the back side of the single row raceway on both the raceway side surface fᵣ and the raceway back side surface f_{b}. The advantage of the short type inductor is that it is easy to manufacture, and the disadvantage thereof is that it is easily lead to an increase in the degree of thermal deform of the bearing ring if there is an inconsistency at the circumferential positions of the double row raceways r₁, r₂.

In the embodiments shown in Figs. 5A and 5B, the first inductor pack Gᵢ₁ comprises a first raceway side short type inductor iᵣ₁ covering the first raceway r₁ and a first raceway back side short type inductor i_{b1} covering the back side of the first raceway r₁, and the second inductor pack Gᵢ₂ comprises a second raceway side short type inductor iᵣ₂ covering the second raceway r₂ and a second raceway back side short type inductor i_{b2} covering the back side of the second raceway r₂. Since the circumferential positions of the two inductor packs Gᵢ₁ and Gᵢ₂ on the double row raceways r₁ and r₂ are inconsistent, the heat received by the bearing ring on the double row raceways r₁ and r₂ are also inconsistent. This may lead to an increase in degree of the thermal deformation of the double row bearing ring.

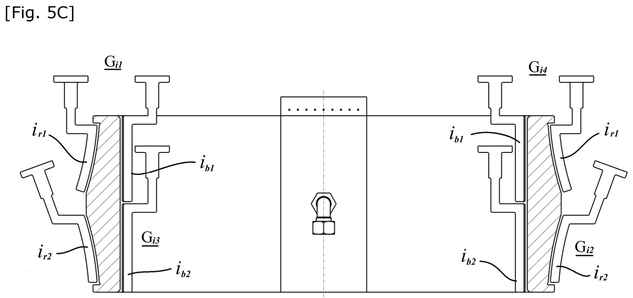

In order to overcome the above defects, an improved method is to make the inductor packs Gᵢ₁, Gᵢ₂ to have circumferential distributions as consistent as possible on the double row raceways r₁ and r₂ of the bearing ring. Still taking the embodiment shown in Figs. 5A and 5B as an example, the inductor pack Gᵢ₁ of the first raceway r₁ and the inductor pack Gᵢ₂ of the second raceway r₂ may be located at the same position in the circumferential direction of the bearing ring (not shown). Alternatively, as shown in Fig.5C, one inductor pack Gᵢ₃ and Gᵢ₄ may also be added on the double row raceways r₁ and r₂, respectively, so that the inductor packs Gᵢ₁, Gᵢ₃ on the raceway r₁ and the inductor packs Gᵢ₂ and Gᵢ₄ on the raceway r₂ have the consistent distribution in the circumferential direction.

Based on the above method, the present invention also provides a machine tool for induction heating and quenching the large bearing ring, comprising a drive mechanism, inductors and showers. Wherein, said drive mechanism is used to drive the bearing ring to rotate in position, said inductors are used to induction heat said bearing ring while said bearing ring is rotating so that the surface temperature of the bearing ring reaches an austenitizing temperature, said showers are used to spray a coolant on the austenitized bearing ring to transform the austenite in the structure of the austenitized bearing ring into the martensite. Said inductors are provided to simultaneously heat the raceway side surface and the raceway back side surface of the bearing ring. Said machine tool is provided to be able to heat and cool the bearing ring in a state in which the bearing ring is rotating, which can significantly improve production efficiency, compared to the scenario where the bearing ring is processed in a stationary state.

The method for induction hardening the bearing ring and its application at the equipment level described above are not limited by the specific embodiments and more general technical solutions will be subject to the limitations of the accompanying claims. Any modifications and improvements to the present invention are within the scope of protection of the present invention, provided they conform to the limitations of the accompanying claims.

## Claims

1. An induction hardening treatment method for a large bearing ring, comprising the following sequential steps:
1) austenitizing step: heating the bearing ring by means of inductors (iᵣ₁, iᵣ₂, I_{b}), so that surface temperature of the bearing ring reaches austenitizing temperature; and
2) martenitizing step: spraying a coolant on the bearing ring by means of showers (sᵣ, s_{b}) to cool the bearing ring rapidly, so as to transform austenite in the structure of the bearing ring into martensite;
**characterized in that** said austenitizing step is realized by simultaneously heating a raceway side surface (fᵣ) and a raceway back side surface (f_{b}) of the bearing ring by means of the inductors (iᵣ₁, iᵣ₂, I_{b}).

2. The method according to claim 1, **characterized in that**, in said austenitizing step, said bearing ring, after having reached the austenitizing temperature, continues to be maintained at that temperature for a predetermined period of time, so that a predetermined depth below a surface of the bearing ring is also austenitized by heat conduction.

3. The method according to claim 1 or 2, **characterized in that**, said martenitizing step is realized by simultaneously spraying the coolant on the raceway side surface (fᵣ) and the raceway back side surface (f_{b}) of the bearing ring by means of the showers (sᵣ, s_{b}).

4. An induction heating and quenching machine tool for a large bearing ring, comprising:
a drive mechanism for driving said bearing ring to rotate in position;
inductors (iᵣ₁, iᵣ₂, I_{b}) for induction heating said bearing ring while said bearing ring is rotating so that surface temperature of the bearing ring reaches austenitizing temperature; and
showers (sᵣ, s_{b}) for spraying a coolant on the austenitized bearing ring to transform austenite in the structure of the bearing ring into martensite;
**characterized in that** the inductors (iᵣ₁, iᵣ₂, I_{b}) are provided to simultaneously heat a raceway side surface (fᵣ) and a raceway back side surface (f_{b}) of the bearing ring.

5. The induction heating and quenching machine tool according to claim 4, **characterized in that** said inductors (iᵣ₁, iᵣ₂, I_{b}) are fixedly distributed at at least one position in a circumferential direction of the bearing ring in a form of inductor packs (Gᵢ₁, Gᵢ₂), each of said inductor packs (Gᵢ₁, Gᵢ₂) comprising a raceway side inductor (iᵣ₁, iᵣ₂) for heating the raceway side surface (fᵣ) of the bearing ring and a raceway back side inductor (I_{b}) for heating the raceway back side surface (f_{b}) of the bearing ring.

6. The induction heating and quenching machine tool according to claim 5, **characterized in that** said showers (sᵣ, s_{b}) are fixedly distributed at at least one position in the circumferential direction of the bearing ring in a form of shower packs (Gₛ₁, Gₛ₂), each of said shower packs (Gₛ₁, Gₛ₂) comprising a raceway side shower (sᵣ) for cooling the raceway side surface (fᵣ) of the bearing ring and a raceway back side shower (s_{b}) for cooling the raceway back side surface (f_{b}) of the bearing ring.

7. The induction heating and quenching machine tool according to any one of claims 4 to 6, **characterized in that** said bearing ring is a double row bearing inner ring or a double row bearing outer ring.

8. The induction heating and quenching machine tool according to claim 7, **characterized in that** each of said inductor packs (Gᵢ₁, Gᵢ₂) comprises one raceway side long type inductor (Iᵣ) covering double row raceways (r₁, r₂) of the bearing ring and one raceway back side long type inductor (I_{b}) covering back sides of the double row raceways (r₁, r₂) of the bearing ring.

9. The induction heating and quenching machine tool according to claim 7, **characterized in that** each of said inductor packs (Gᵢ₁, Gᵢ₂) comprises a raceway side short type inductor (iᵣ₁, iᵣ₂) covering one of double row raceways (r₁, r₂) of the bearing ring and a raceway back side short type inductor (i_{b1}, i_{b2}) covering a back side of the one of the double row raceways.

10. The induction heating and quenching machine tool according to claim 7, **characterized in that** each of said inductor packs (Gᵢ₁, Gᵢ₂) comprises two raceway side short type inductors (iᵣ₁, iᵣ₂) covering double row raceways (r₁, r₂) of the bearing ring and one raceway back side long type inductor (I_{b}) covering back sides of the double row raceways (r₁, r₂) of the bearing ring.
